(19) Europäisches Patentamt

European Patent Office

Office européen des brevets

(11) EP 0 688 715 B1

(12) EUROPÄISCHE PATENTSCHRIFT

(45) Veröffentlichungstag und Bekanntmachung des Hinweises auf die Patenterteilung:
10.09.1997 Patentblatt 1997/37

(51) Int. Cl.$^6$: B64C 31/024, B64D 27/24

(21) Anmeldenummer: 95107531.6

(22) Anmeldetag: 18.05.1995

(54) **Verfahren zur Vortriebserzeugung in Höhenflugzeugen**

Method to create thrust for aircrafts flying at altitude

Méthode pour engendrer une force de propulsion pour avions volants en altitude

(84) Benannte Vertragsstaaten:
DE FR GB

(30) Priorität: 23.06.1994 DE 4421875

(43) Veröffentlichungstag der Anmeldung:
27.12.1995 Patentblatt 1995/52

(73) Patentinhaber: Daimler-
Benz Aerospace Aktiengesellschaft
80995 München (DE)

(72) Erfinder: Przybilla, Gerhard
D-28237 Bremen (DE)

(74) Vertreter: Hansmann, Dierk, Dipl.-Ing.
Patentanwälte
Hansmann-Klickow-Hansmann
Jessenstrasse 4
22767 Hamburg (DE)

(56) Entgegenhaltungen:

**Beschreibung**

Die Erfindung betrifft ein Verfahren zur Vortriebserzeugung in langreichweitigen Höhenflugzeugen.

Sowohl für militärische als auch für zivile Zwecke werden künftig Flugzeuge benötigt, die in wesentlich größeren Flughöhen operieren können als die bisher bekannten Flugzeuge. So sind beispielsweise zur wissenschaftlichen Erforschung und Überwachung der chemischen und physikalischen Prozesse in der Atmosphäre Flugzeuge erwünscht, die sich über einen längeren Zeitraum in einer Flughöhe von etwa 30 Kilometern aufhalten können. Infolge des geringen Luftdrucks, der in diesen Flughöhen herrscht, sind konventionelle Antriebe für diesen Einsatzbereich nur bedingt geeignet. So sind beispielsweise bei propellerbetriebenen Höhenflugzeugen, die im Unterschallbereich operieren, übergroße Propeller erforderlich, deren Blattspitzengeschwindigkeit sich mit Überschallgeschwindigkeit bewegen und bei denen erhebliche Struktur- und Gewichtsprobleme bestehen.

Deshalb ist es Aufgabe der Erfindung, ein Verfahren zur Vortriebserzeugung für derartige Höhenflugzeuge anzugeben, bei dem der technische Aufwand und der Energiebedarf auf ein Minimum reduziert sind. Weitere Aufgabe der Erfindung ist es, eine Vorrichtung zur Durchführung eines solchen Verfahrens bereitzustellen.

Die Erfindung löst die erste Aufgabe durch ein Verfahren mit den kennzeichnenden Merkmalen des Patentanspruches 1. Die Lösung der weiteren Aufgabe erfolgt durch ein Flugzeug, dessen kennzeichnenden Merkmale im Patentanspruch 3 angegeben sind. Das erfindungsgemäße Verfahren führt dabei zu einer deutlichen Verbesserung des Wirkungsgrades der Antriebsleistung für Höhenflugzeuge, die sich im Unterschallbereich bewegen, und ermöglicht es, Langzeitflüge in einem vorgegebenen Höhenband in großen Flughöhen durchzuführen. Da sich zudem alle bewegten Teile mit Geschwindigkeiten bewegen, die lediglich im Bereich der Fluggeschwindigkeit liegen, sind Probleme der Materialfestigkeit weitgehend eliminiert.

Das Funktionsprinzip des Verfahrens nach der Erfindung, das nachfolgend anhand eines in der Zeichnung dargestellten Ausführungsbeispiels näher erläutert werden soll, ähnelt dabei dem des bekannten Jo-Jo-Prinzips. Es zeigen:

Fig. 1 eine schematische Darstellung einer Flugeinheit sowie der auf diese einwirkenden Kräfte und

Fig. 2 den zeitlichen Verlauf der Flugbahn der in Fig. 1 dargestellten Flugeinheit.

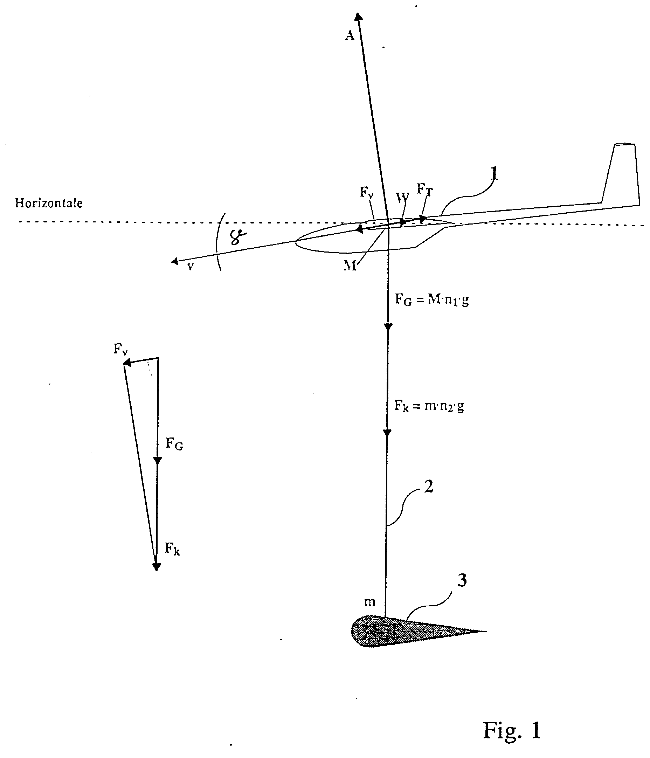

Bei dem in Fig. 1 dargestellten Flugzeug 1 handelt es sich um eine Maschine, die in erster Linie für extreme Flughöhen oberhalb etwa 25 Kilometern vorgesehen ist. Am Rumpf des Flugzeuges, das die Masse M besitzt, ist über ein Seil 2 ein stromlinienförmiger Massekörper 3 aufgehängt, der die Masse m aufweist. Zusätzlich vorgesehen, aber in der Zeichnung nicht dargestellt, ist ein Motor-/Generator-System, das mit dem Seil 2 verbunden ist, sowie eine Steuerungs- und Regelungseinheit. Diese beiden Komponenten sind bei dem hier beschriebenen Ausführungsbeispiel im Rumpf des Flugzeuges 1 angeordnet, sie können jedoch auch im Massekörper 2 untergebracht werden.

Eine besondere Ausführung der Koppeleinrichtung 2 kann mit elektrischen Leitern ausgestattet werden, um die Übertragung elektrischer Energie zwischen Flugzeug 1 und Massekörper 3 wahlweise in beiden Richtungen zu ermöglichen.

Nachdem das Flugzeug 1 die für seine Mission vorgesehene Flughöhe H erreicht hat, wird die aus dem Flugzeug 1, dem Seil 2 sowie dem Massekörper 3 bestehende Flugeinheit derart periodisch beaufschlagt, daß unter der Nutzung von Beschleunigungskräften der durch den Luftwiderstand W der Flugeinheit hervorgerufene Geschwindigkeitsverlust im Mittel ausgeglichen wird. Hierzu wird der Massekörper 3 zusätzlich zur Erdbeschleunigung g in periodischen Abständen über das Motor-/Generator-System einer weiteren Beschleunigung ausgesetzt. Dieses Motor-/Generator-System besteht bei dem hier beschriebenen Ausführungsbeispiel aus einer Seilwinde, die mit einer als Motor oder Generator zu betreibenden Maschine gekoppelt ist und die einerseits eine zusätzliche Antriebskraft liefert und über die andererseits Bremsenergie zurückgewonnen wird.

Bei dem in Fig. 1 vereinfacht dargestellten Betriebszustand des Flugzeuges 1, das sich mit einer Geschwindigkeit V mit dem Neigungswinkel $\gamma$ vorwärts bewegt, kompensiert die Vortriebskraft Fv den Lufwiderstand W und bewirkt zusätzlich eine Beschleunigung des Flugzeuges in Längsrichtung. Die der Vortriebskraft Fv entgegenwirkenden Kräfte sind der Luftwiderstand W und die Trägheitskraft Fr. Fv ist die in Flugrichtung wirkende Komponente der auf das Flugzeug 1 in vertikaler Richtung einwirkenden Kräfte $F_G$ und $F_k$. Die Kraft $F_G$ ist dabei die Massenkraft des Flugzeuges 1

$$F_G = M \cdot n_1 \cdot g$$

wobei $n_1$ ein Lastvielfaches ist, das sich aus der Fluggeschwindigkeit v errechnet. Die Kraft $F_k$ ist die Koppelkraft, die der Massekörper 3 über das Seil 2 auf das Flugzeug 1 einwirkt und die sich aus dem Gewicht des Massekörpers 3 ergibt

$$F_k = m \cdot n_2 \cdot g$$

wobei $n_2$ wiederum ein Lastvielfaches ist.

Die Kraft A in Fig. 1 ist der aerodynamische Auftrieb des Flugzeuges 1. Aus Gründen der Vereinfachung sind die aerodynamische Kräfte am Seil 2 und am Massekörper 3 vernachlässigt.

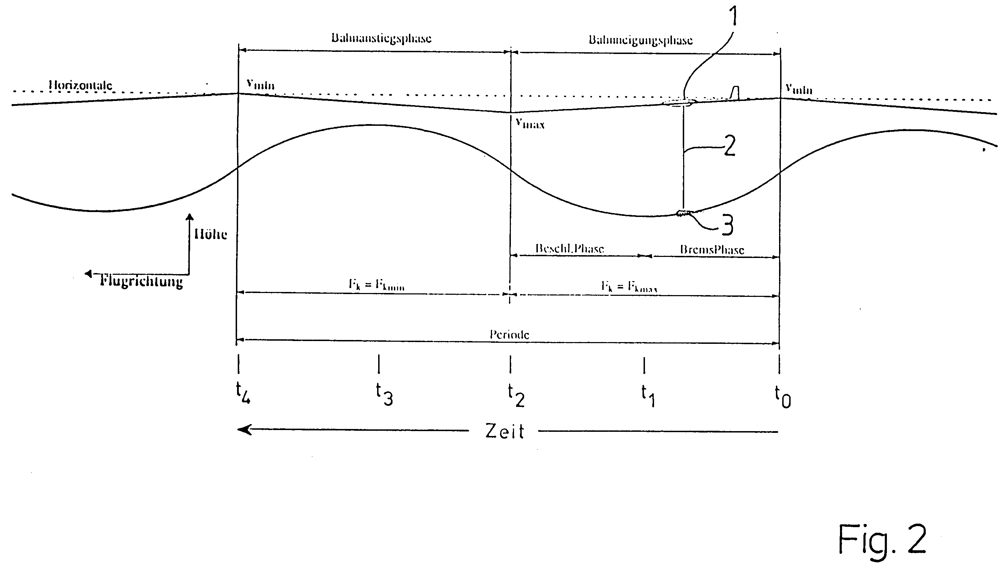

Wie aus dem in Fig. 2 dargestellten zeitlichen Verlauf der Bahnkurven des Flugzeuges 1 und des Massekörpers 3 in ruhender Luft und bei eingeschwungenem Flugverlauf ersichtlich ist, wird der durch den Luftwiderstand verursachte dauernde Verlust an Flughöhe H dadurch kompensiert, daß die Flugeinheit dynamisch mit ansteigender und abfallender Koppelkraft $F_k$ angesteuert wird, bei gleichzeitiger und koordinierter Steuerung der Längsneigung des Flugzeuges 1, woraus periodische Änderungen der Flughöhe H und der Fluggeschwindigkeit v resultieren. Das Flugzeug 1 fliegt dabei eine in der Zeichnung von rechts nach links verlaufende Bahn in Form eines flachen Sägezahns, die sich wie folgt ergibt:

Während das Flugzeug 1, beginnend mit dem Zeitpunkt $t_0$, eine unter einem Winkel gegen die Horizontale abwärts geneigte Bahn fliegt, wird der Massekörper 3, der sich bis zu diesem Zeitpunkt aufgrund der Erdbeschleunigung g senkrecht von Flugzeug 1 wegbewegte, mit maximaler Koppelkraft $F_k$ beaufschlagt. Dadurch wird der Massekörper 3 zunächst in seinem Fall abgebremst und ab dem Zeitpunkt $t_1$ in Richtung auf das Flugzeug beschleunigt. Die Geschwindigkeit des Flugzeuges 1 wächst dabei von einem Minimalwert $V_{min}$ zum Zeitpunkt $t_0$ bis auf einem Maximalwert $V_{max}$ zum Zeitpunkt $t_2$ an.

Zu diesem Zeitpunkt $t_2$ wird die Koppelkraft $F_k$ auf einen Minimalwert reduziert. Der Massekörper 3 bewegt sich dann zwar noch aufgrund seiner Massenträgheit entgegen der auf ihn einwirkenden Erdbeschleunigung g weiter in Richtung auf das Flugzeug 1, erreicht aber zum Zeitpunkt $t_3$ den Scheitelpunkt seiner Bahnkurve und bewegt sich anschließend wieder vom Flugzeug 1 weg. Das Flugzeug 1 fliegt ab dem Zeitpunkt $t_2$, d.h. bei Erreichen seiner Maximalgeschwindigkeit $V_{max}$, eine ansteigende Bahn, bei der es die hinzugewonnene kinetische Energie in potentielle Energie umwandelt. Infolge der aufwärtsgerichteten Bahnneigung hat die Kraftkomponente $F_v$ zwar eine abbremsende Wirkung, da die Koppelkraft $F_k$ jedoch ihren Minimalwert eingenommen hat, ist Fv jetzt geringer als während der Bahnneigungsphase des Flugzeuges 1 zwischen $t_0$ und $t_2$.

Die Bahnanstiegsphase des Flugzeuges 1, die mit dem Erreichen der Maximalgeschwindigkeit $V_{max}$ zum Zeitpunkt $t_2$ begann, endet mit dem Zeitpunkt $t_4$, bei dem die Geschwindigkeit des Flugzeuges 1 auf ihr Minimum, $V_{min}$, abgesunken ist und bei dem die Flugeinheit ihren Ausgangszustand für den Beginn einer erneuten Periode erreicht. Die Energiebilanz des Motor-/Generator-Systems, das jeweils bremsend und beschleunigend auf den Massekörper 3 einwirkt, entspricht dabei dem Verlust durch den Luftwiderstand.

## Patentansprüche

1.  Verfahren zur Vortriebserzeugung in langreichweitigen Höhenflugzeugen, dadurch gekennzeichnet, daß ein unterhalb des Flugzeuges (1) gehalterter Massekörper (3) in periodischen Abständen in Richtung auf das Flugzeug (1) beschleunigt, unter dem Einfluß der Erdbeschleunigung von diesem wegbewegt und anschließend erneut in Richtung auf das Flugzeug (1) beschleunigt wird.

2.  Verfahren nach Anspruch 1, dadurch gekennzeichnet, daß die Fallbewegung des Massekörpers (3) abgebremst und zur Energiegewinnung genutzt wird.

3.  Vorrichtung zur Durchführung des Verfahrens nach Anspruch 1 oder 2, gekennzeichnet durch ein Flugzeug (1), an dessen Rumpf ein Massekörper (3) über eine Koppeleinrichtung (2) in veränderlichem Abstand gehaltert ist, wobei der Massekörper (3) unterhalb des Flugzeuges (1) angeordnet ist und in Richtung auf das und weg vom Flugzeug beschleunigt wird.

4.  Vorrichtung nach Anspruch 3, dadurch gekennzeichnet, daß die Koppeleinrichtung aus einem Seil (2) besteht.

5.  Vorrichtung nach Anspruch 4, dadurch gekennzeichnet, daß das Seil (2) über eine geregelte Seilwinde beaufschlagbar ist.

6.  Vorrichtung nach Anspruch 5, dadurch gekennzeichnet, daß die Seilwinde mit einer Motor-/Generatoreinheit gekoppelt ist.

7.  Vorrichtung nach Anspruch 6, dadurch gekennzeichnet, daß die Motor-/Generatoreinheit entweder Bestandteil des Flugzeugs (1) oder des Massekörpers (3) sein kann.

8.  Vorrichtung nach Anspruch 7, dadurch gekennzeichnet, daß die Koppeleinrichtung (2) derart mit elektrischen Leitern ausgestaltet wird, daß eine Übertragung elektrischer Energie zwischen Flugzeug (1) und Massekörper (3) in beiden Richtungen möglich ist.

## Claims

1.  Method of generating propulsion in long-range, high-altitude aircraft, characterised in that a mass element (3) secured underneath the aircraft (1) is accelerated towards the aircraft (1) at periodic intervals, moved away from the latter under the influence of the acceleration due to gravity, and then accelerated towards the aircraft (1) again.

2.  Method according to claim 1, characterised in that the falling movement of the mass element (3) is slowed down and used for gaining energy.

3.  Device for performing the method according to claim 1 or 2, characterised by an aircraft (1), to the fuselage of which a mass element (3) is secured at a variable distance via a coupling arrangement (2), the said mass element (3) being disposed underneath the aircraft (1) and accelerated towards and away from the latter.

4. Device according to claim 3, characterised in that the coupling arrangement consists of a cable (2).

5. Device according to claim 4, characterised in that the cable (2) can be acted upon via a regulated cable winch.

6. Device according to claim 5, characterised in that the cable winch is coupled to a motor/generator unit.

7. Device according to claim 6, characterised in that the motor/generator unit may be a component part either of the aircraft (1) or of the mass element (3).

8. Device according to claim 7, characterized in that the coupling arrangement (2) is equipped with electrical conductors in such a way that the transmission of electrical energy between the aircraft (1) and the mass element (3) is possible in both directions.

**Revendications**

1. Procédé destiné à la production d'une force de propulsion dans des avions longcourriers volant à haute altitude, **caractérisé en ce que** un corps (3) maintenu sous l'avion (1) est accéléré périodiquement en direction de l'avion (1), est écarté de celui-ci sous l'influence de l'accélération due à la gravité et est ensuite à nouveau accéléré en direction de l'avion (1).

2. Procédé suivant la revendication 1, caractérisé en ce que la chute du corps (3) est freinée et utilisée dans le but de produire de l'énergie.

3. Dispositif destiné à exécuter le procédé suivant la revendication 1 ou 2, caractérisé par un avion (1), en-dessous du fuselage duquel est maintenu à distance variable un corps (3) par l'intermédiaire d'un dispositif de liaison (2), le corps (3) étant disposé sous l'avion (1) et étant accéléré en direction de l'avion et éloigné en accélération de celui-ci.

4. Dispositif suivant la revendication 3, caractérisé en ce que le dispositif de liaison se compose d'un câble (2).

5. Dispositif suivant la revendication 4, caractérisé en ce que le câble (2) peut être arrêté par l'intermédiaire d'un treuil réglable.

6. Dispositif suivant la revendication 5, caractérisé en ce que le treuil est couplé à un moteur/générateur.

7. Dispositif suivant la revendication 6, caractérisé en ce que le moteur/générateur peut être une composante soit de l'avion (1) soit du corps (3).

8. Dispositif suivant la revendication 7, caractérisé en ce que le dispositif de liaison (2) est équipé de conducteurs électriques de telle manière qu'une transmission d'énergie électrique entre l'avion (1) et le corps (3) est possible dans les deux directions.

A

Horizontale

$\mathcal{E}$

v

$F_v$  W  $F_T$

1

M

$F_G = M \cdot n_1 \cdot g$

$F_k = m \cdot n_2 \cdot g$

2

m

3

$F_v$

$F_G$

$F_k$

Fig. 1

Fig. 2

EP 0 688 715 B1